Europäisches Patentamt

European Patent Office

Office européen des brevets

(19)

(11) Numéro de publication: **0 072 383 B1**

# FASCICULE DE BREVET EUROPEEN

(12)

(45) Date de publication du fascicule du brevet:
**16.01.85**

(51) Int. Cl.⁴: **C 03 C 15/00**, B 65 G 49/02

(21) Numéro de dépôt: **81401292.8**

(22) Date de dépôt: **12.08.81**

(54) **Machine de dépolissage chimique d'articles en verre.**

(43) Date de publication de la demande:
**23.02.83 Bulletin 83/8**

(45) Mention de la délivrance du brevet:
**16.01.85 Bulletin 85/3**

(84) Etats contractants désignés:
**AT DE GB IT SE**

(56) Documents cités:
**FR - A - 1 161 765**
**GB - A - 1 177 274**
**US - A - 2 036 647**
**US - A - 2 166 428**

(73) Titulaire: **Moret, Claude M., 51, rue Pasteur, F-77120 Pommeuse (FR)**

(72) Inventeur: **Moret, Claude M., 51, rue Pasteur, F-77120 Pommeuse (FR)**

(74) Mandataire: **Lachassagne, Jacques, Boite Postale 07, F-78430 Louveciennes (FR)**

## Description

La présente invention concerne une machine et certains de ses organes constitutifs, destinée au dépolissage chimique d'articles en verre et plus particulièrement de flacons.

On sait que les flacons de verre dépoli sont largement utilisés aussi bien dans l'industrie et au laboratoire que dans le domaine de la parfumerie et de la pharmacie.

Toutefois, malgré la demande croissante de tels articles, la fabrication de ces derniers a encore lieu à l'heure actuelle, à l'échelle artisanale, impliquant essentiellement des interventions manuelles. De tels modes de fabrication entraînent, d'une part, une faible productivité et, d'autre part, des conditions particulièrement malaisées de travail, outre le danger permanent auquel sont exposés les manipulateurs du fait de la toxicité particulière des réactifs chimiques mis en œuvre.

A l'heure actuelle en effet, le dépolissage de flacons consiste à fermer ces flacons avec un bouchon de caoutchouc ou une cape en fonction du type de col, à ranger les flacons ainsi bouchés dans des paniers ajourés, à tremper ces paniers dans le réactif, puis à les laver au jet d'eau, à effectuer une neutralisation chimique, à laver à nouveau et à sécher. Toutes ces opérations sont effectuées:

— soit manuellement, les manipulateurs devant notamment se protéger au moyen de lunettes, de gants, de tabliers et, si possible, de filtres respiratoires;

— soit à l'aide d'installations plus ou moins sophistiquées, telles que décrites notamment dans les brevets américains Nos 2036647 et 2166428.

La présente invention vise à remédier à ces inconvénients en proposant une machine entièrement automatique, mais de conception simple, pouvant être commandée à distance et permettant une production régulière et aisée, en toute sécurité, d'articles en verre dépoli chimiquement.

La machine selon l'invention est du type à chaîne transporteuse continue défilant au droit de postes de traitement, ladite chaîne étant en un matériau inattaquable par les réactifs mis en œuvre et munie d'ensembles d'accrochage coopérant avec des supports d'articles à dépolir, lesdits supports formant en outre des bouchons étanches; la chaîne est constituée de maillons articulés deux à deux autour d'un axe, un axe prolongé à l'extérieur d'au moins un côté de la chaîne constituant un organe d'accrochage pour un support d'articles.

Suivant d'autres caractéristiques avantageuses:

— un support de flacon est constitué par un embout étanche fixé au col d'un flacon et percé d'un orifice dans lequel peut s'insérer un axe prolongé de la chaîne;

— un ensemble d'accrochage est réparti sur trois maillons successifs de la chaîne, les trois axes d'articulation étant prolongés, l'axe central étant destiné à coopérer avec un bouchon-support, et les deux axes prolongés adjacents étant munis d'un manchon destiné à former butée de débattement angulaire dudit bouchon-support autour de l'axe central.

D'autres caractéristiques et avantages de l'invention ressortiront mieux de la description qui va suivre, faite en regard des dessins annexés, sur lesquels:

la fig. 1 représente un schéma synoptique illustrant le fonctionnement d'une machine selon l'invention;

la fig. 2 représente une vue schématique en perspective, partiellement en coupe, d'un ensemble d'accrochage coopérant avec un bouchon-support de flacon fixé par l'intérieur du goulot, et

la fig. 3 représente une vue schématique partiellement en coupe d'un bouchon-support de flacon à bague à sertir.

Sur ces dessins, les mêmes références désignent les mêmes éléments.

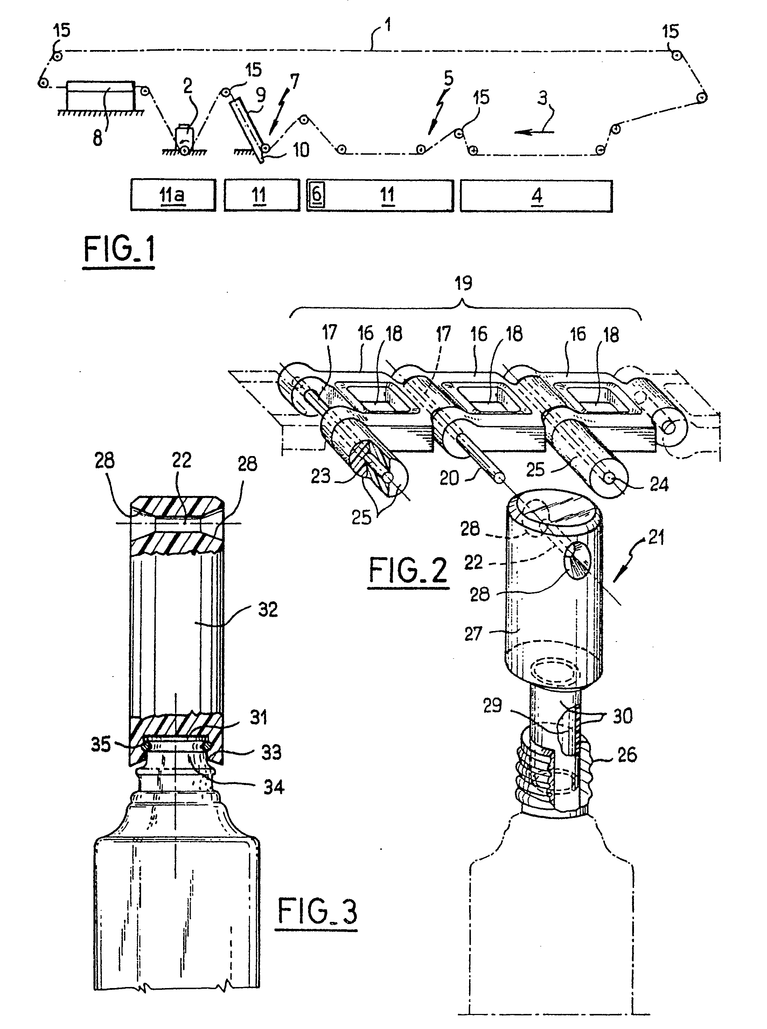

En se référant à la fig. 1, la machine conforme à l'invention comprend un bâti convenable (non représenté) sur lequel se déplace une chaîne transporteuse continue 1 sous l'effet d'un moteur-réducteur 2 à vitesse régable de tout type approprié, permettant de fixer la durée de traitement au niveau de chaque poste. La chaîne se déplace par exemple dans le sens de la flèche 3, au droit des postes de traitement successifs, à savoir: bain de dépolissage 4, poste de lavage par ultra-sons 5, de neutralisation 6, de rinçage 7 et de séchage 8.

Le bain de dépolissage est constitué par une solution d'un réactif approprié tel que, par exemple, celui vendu dans le commerce sous l'appellation Lérite SX 13. Le bac contenant ce bain peut être muni des éléments usuels de chauffage ou de refroidissement.

Le poste de rinçage, référencé 7, comprend un tube incliné 9 muni de buses d'injection d'eau sous pression (non représentées). La chaîne et les articles qui y sont accrochés pénètrent dans le tube 9 par son ouverture inférieure, elle-même formant un bec 10 d'écoulement des eaux de rinçage dans un bac de réception 11. Un bac de réception supplémentaire 11a peut en outre être disposé après la sortie du poste de rinçage 7.

Le poste de neutralisation 6 est constitué par un bac contenant un bain convenable en fonction du réactif de dépolissage, par exemple une solution aqueuse d'acide chlorhydrique dans le cas de la Lérite SX 13.

Le poste de séchage 8 est constitué par un tunnel muni avantageusement d'éléments à infra-rouge.

La machine telle que définie ci-dessus peut être complétée bien entendu d'un poste de dégraissage préliminaire ainsi que d'un poste d'accrochage d'articles et d'un poste de décrochage desdits articles à la sortie du tunnel 8 dans le sens 3, la chaîne transporteuse 1 étant continue et passant autour de poulies ou de roues dentées convenables 15.

En se référant à la fig. 2, la chaîne transporteuse est constituée de maillons 16 articulés autour d'axes 17. Comme mentionné plus haut, ces maillons sont réalisés en un matériau inattaquable par les réactifs mis en œuvre, par exemple en une matière plastique du type polycarbonate, les axes étant eux-mêmes en acier inoxydable. Chaque maillon comporte un évidement central 18 dans lequel peut s'insérer une dent d'une roue dentée d'entraînement ou de renvoi.

Un ensemble d'accrochage selon l'invention, de référence générale 19, est réparti sur trois maillons successifs, l'axe d'articulation de ces maillons étant prolongé au moins d'un côté de la chaîne. L'axe prolongé 20 du maillon central constitue l'organe d'accrochage proprement dit d'un support de référence générale 21 par son orifice 22, comme ce sera décrit plus en détail ci-après. Les axes prolongés 23 et 24 des deux maillons adjacents sont revêtus d'un manchon 25 en une matière plastique convenable, par exemple du type polyamide.'un manchon 25 en une matière plastique convenable, par exemple du type polyamide.

Un support 21 pour flacons à col fileté 26 assure à la fois la fixation et le bouchage étanche dudit flacon, étant entendu qu'il n'est généralement pas souhaitable de dépolir l'intérieur d'un flacon pour les applications mentionnées précédemment. Un tel support comprend, d'une part, un corps cylindrique 27 muni à sa partie supérieure d'un orifice ou canal 22, d'axe perpendiculaire à son axe longitudinal, et dans lequel peut s'insérer l'axe prolongé 20. De façon avantageuse le canal 22 débouche sur deux évasements 28 facilitant cette insertion.

L'extrémité du corps 27, opposée à la partie comportant le canal 22, comprend un mandrin conique 29, d'une pièce avec ledit corps, sur lequel est disposé un manchon élastique 30. De façon avantageuse, le corps et le mandrin sont réalisés en une matière rigide telle que polyamide, tandis que le manchon 30, devant être élastique pour assurer la fixation et l'étanchéité du col 26, est de préférence réalisé en un chlorure de polyvinyle.

Suivant une autre forme de réalisation, et en se référant à la fig. 3, un support de flacon à bague à sertir 31 comprend un corps cylindrique 32 muni comme précédemment d'un canal 22 et d'évasements 28 destinés à coopérer avec un axe prolongé 20. L'extrémité du corps opposée à celle comportant le canal 22 est munie d'un alésage cylindrique 33, d'un diamètre admettant le col 34 du flacon, et comportant une gorge annulaire dans laquelle est disposé un joint torique 35 pouvant s'engager de façon étanche sous la bague 31.

Lorsqu'un support est engagé sur un axe d'accrochage 20 (fig. 2), son débattement angulaire se trouve limité par le contact du corps cylindrique et des manchons 25 adjacents qui agissent comme butées. En effet, lorsque des flacons vides et étanches passent dans les bains prévus, ils ont tendance à flotter et à prendre une position horizontale.

Les butées permettent au contraire de les plonger convenablement dans ces bains en les limitant à une position oblique.

Par ailleurs, afin d'éviter que des articles successifs accrochés à la chaîne transporteuse ne se heurtent, ce qui aurait notamment pour effet de les rayer, les ensembles d'accrochage 19 (fig. 2) sont disposés de place en place sur la chaîne, éventuellement de façon équidistante, en ménageant entre eux un espacement portant sur plusieurs maillons.

De façon avantageuse encore, et pour renforcer le caractère d'automaticité de la machine, les postes d'accrochage et de décrochage peuvent être associés à des postes de bouchage et de débouchage de flacons, en particulier au moyen de vérins.

Il est bien entendu que la présente invention n'a été décrite et représentée qu'à titre explicatif mais nullement limitatif et qu'on pourra y apporter toute modification, dans le domaine des équivalences techniques, sans sortir de son cadre.

## Revendications

1. Machine de dépolissage chimique d'articles en verre, notamment des flacons, du type à chaîne transporteuse continue 1 défilant au droit de postes de traitement successifs 4, 11, 6 et 11a depuis le dépolissage jusqu'au séchage, comprenant en outre des supports 21 d'articles formant des bouchons étanches pour les flacons, caractérisée par le fait que la chaîne est en un matériau inattaquable par les réactifs chimiques mis en œuvre, qu'elle est munie d'ensembles d'accrochage 19 coopérant avec des supports d'articles à dépolir, et qu'elle est constituée de maillons 16 articulés deux à deux autour d'un axe, un axe 20 prolongé à l'extérieur d'au moins un côté de la chaîne constituant un organe d'accrochage pour un support 21 d'article.

2. Machine selon la revendication 1, caractérisée par le fait qu'un support 21, 32 de flacon est constitué par un embout étanche 29/30, 33/35 fixé au col d'un flacon et percé d'un orifice 28 dans lequel peut s'insérer un axe prolongé 20 de la chaîne 1.

3. Machine selon l'une des revendications 1 ou 2, caractérisée par le fait qu'un ensemble d'accrochage est réparti sur trois maillons successifs de la chaîne, les trois axes 23, 20, 24 d'articulation étant prolongés, l'axe central 20 étant destiné à coopérer avec un bouchon-support, et les deux axes prolongés adjacents étant munis d'un manchon destiné à former butée de débattement angulaire dudit bouchon-support 21, 32 autour de l'axe central 20.

4. Machine selon la revendication 3, caractérisée par le fait que les ensembles d'accrochage 19 sont disposés de place en place sur la chaîne transporteuse, de façon que l'espacement entre ensembles d'accrochage porte sur plusieurs maillons de ladite chaîne.

5. Machine selon l'une quelconque des revendications 1 à 4, caractérisée par le fait qu'elle comporte un poste 6 de neutralisation de l'agent de dépolissage entre un poste 5 de lavage par ultra-sons et un poste 7 de rinçage.

6. Machine selon la revendication 5, caractérisée par le fait que le poste de rinçage comprend un tube incliné 9 muni de buses d'injection d'eau sous pression, dont l'entrée est disposée à la partie inférieure dudit tube et est munie d'un bec 10 d'écoulement des eaux de rinçage.

## Patentansprüche

1. Vorrichtung zur chemischen Mattierung von Glasartikeln, insbesondere Flaschen, in einer Bauart, die eine endlose Förderkette (1) aufweist, die an den Stellen der aufeinanderfolgenden Bearbeitungsstationen (4, 11, 6 und 11a) ausgehend von der Mattierung bis zur Trocknung vorbeiläuft, und die ferner Artikelhalter (21) aufweist, die dichte Verschlusskappen für die Flaschen bilden, dadurch gekennzeichnet, dass die Kette aus einem gegenüber den verwendeten chemischen Reaktionsmitteln resistenten Material besteht, dass sie mit Anbringungseinrichtungen (19) versehen ist, die mit den Haltern für die zu mattierenden Artikel zusammenarbeiten, und dass sie von Gliedern (16) gebildet wird, die paarweise um eine Achse gelenkig angebracht sind, wobei eine Achse (20), die von wenigstens einer Seite der Kette nach aussen verlängert ist, ein Anbringungsteil für einen Artikelhalter (21) bildet.

2. Vorrichtung nach Anspruch 1, dadurch gekennzeichnet, dass ein Flaschenhalter (21, 32) von einem dichten Ansatzstück (29/30, 33/35) gebildet wird, das am Flaschenhals befestigt ist, und von einer Öffnung (28) durchzogen ist, in die eine verlängerte Achse (20) der Kette (1) einführbar ist.

3. Vorrichtung nach einem der Ansprüche 1 oder 2, dadurch gekennzeichnet, dass eine Anbringungseinrichtung auf drei aufeinanderfolgenden Gliedern der Kette verteilt ist, dass die drei Gelenkachsen (23, 20, 24) verlängert sind, dass die Mittelachse (20) dazu bestimmt ist, mit einem Verschlusskappenhalter zusammenzuarbeiten, und dass die beiden verlängerten benachbarten Achsen mit einer Hülse versehen sind, die dazu bestimmt ist, einen Anschlag für das Winkelspiel des Verschlusskappenhalters (21, 32) um die Mittelachse (20) zu bilden.

4. Vorrichtung nach Anspruch 3, dadurch gekennzeichnet, dass die Anbringungseinrichtungen (19) auf der Transportkette von Stelle zu Stelle derart angeordnet sind, dass der Abstand zwischen den Anbringungseinrichtungen auf mehreren Gliedern der Kette abgestützt ist.

5. Vorrichtung nach einem der Ansprüche 1 bis 4, dadurch gekennzeichnet, dass sie eine Station (6) zur Neutralisierung des Mattierungsmittels zwischen einer Station (5) zum Waschen mit Hilfe von Ultraschall und einer Spülstation (7) aufweist.

6. Vorrichtung nach Anspruch 5, dadurch gekennzeichnet, dass die Spülstation ein geneigtes Rohr (9) aufweist, das mit Düsen zur Ausgabe von unter Druck stehendem Wasser versehen ist, dessen Eingang im unteren Teil des Rohrs angeordnet und mit einer Mündung (10) für den Spülwasserstrom versehen ist.

## Claims

1. A machine for the chemical polishing of glass articles, notably of bottles, of the type having a continuous transport chain (1) passing successive treatment stations (4, 11, 6 and 11a) for the polishing and drying, comprising among other things supports (21) for articles forming impervious plugs for the bottles, characterised by the fact that the chain is in a material which is not attacked by the chemical reagents used, that is provided with engagement assemblies (19) cooperating with the supports for the articles to the polished, and that it is constituted of links (16) articulated two and two around an axis (20) extending to the outside of at least one side of the chain constituting means for the engagement of an article support (21).

2. A machine according to Claim 1, characterised by the fact that a support (21, 32) for a bottle is constituted by an impervious projection (29/30, 33/35) fixed to the neck of a bottle and pierced by an orifice (28) in which an extended axis (20) of the chain (1) can be inserted.

3. A machine according to one of Claims 1 or 2, characterised by the fact that an engagement assembly is made up on three successive links of the chain, the three axes (23, 20, 24) of articulation being extended, the central axis (20) being intended to cooperate with a plug support and the two adjacent extended axes being provided with a sleeve intended to form an end of an angular mounting of the said plug support (21, 23) around the central axis (20).

4. A machine according to Claim 3, characterised by the fact that the engagement assemblies (19) are disposed from place to place on the transport chain, so that the spacing between engagement assemblies carries on several links of the said chain.

5. A machine according to any one of Claims 1 to 4, characterised by the fact that it comprises a station (6) for neutralisation of the polishing agent between a station (5) for ultrasonic washing and a station (7) for rinsing.

6. A machine according to Claim 5, characterised by the fact that the rinsing station comprises an inclined tube (9) provided with injection nozzles for water under pressure, of which the entry is disposed at the lower part of the said tube and provided with a break (10) for the running away of rinsing water.

FIG_1

FIG_2

FIG_3